# EUROPÄISCHE PATENTSCHRIFT

(11) **EP 0 812 246 B1**
(45) Veröffentlichungstag und Bekanntmachung des Hinweises auf die Patenterteilung: **13.10.1999**
(21) Anmeldenummer: 96904755.4
(22) Anmeldetag: 09.02.1996
(51) Int. Cl.: B23K 1/00

(54) **WABENKÖRPER MIT NUR TEILWEISER ANBINDUNG AN EIN MANTELROHR**
HONEYCOMBED BODY WITH ONLY PARTIAL ATTACHMENT TO A PROTECTIVE TUBE
CORPS A NID D'ABEILLES RATTACHE UNIQUEMENT PARTIELLEMENT A UN TUBE DE PROTECTION

(30) Priorität: 02.03.1995 DE 19507299
(43) Veröffentlichungstag der Anmeldung: 17.12.1997
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9600562
(87) Internationale Veröffentlichungsnummer: WO9626805

(56) Entgegenhaltungen:
- EP-A- 0 490 222
- DE-A- 4 306 052
- FR-A- 2 577 616
- US-A- 4 832 998

## Beschreibung

Die Erfindung bezieht sich auf einen Wabenkörper, insbesondere für eine Vorrichtung zur katalytischen Umsetzung von Abgasen in einem Abgassystem, insbesondere für ein Abgassystem einer Verbrennungskraftmaschine, vorzugsweise für Otto-Motoren. Der Wabenkörper weist einen in einem Mantelrohr angeordneten von einem Abgas durchströmbaren Wabenkörper auf, dessen Strömungskanäle zwischen aneinander grenzenden Lagen gewickelter oder geschichteter, wenigstens teilweise strukturierter Bleche gebildet sind. Der Wabenkörper ist nur über einen Teil seiner malen Länge mit dem Mantelrohr verlötet.

Ein solcher Wabenkörper ist durch die DE 29 24 592 A1 bekannt. Zur Verbindung des Wabenkörpers mit dem Mantelrohr schlägt die DE 29 24 592 unter anderem vor, den in einem Mantelrohr angeordneten Wabenkörper in ein Tauchbad für einen Binder mit den Stirnflächen des Wabenkörpers einzutauchen, wodurch sich benetzte Zonen ergeben. Die Lotbeschichtung erfolgt dadurch, daß aus einem Lotpulver-Speicher über ein Sieb das Lot auf die stirnseitigen Benetzungsfläche aufgebracht wird. Der so beschichtete Wabenkörper wird im Vakuum oder unter Schutzgas mit dem Mantelrohr verlötet.

Es ist ferner durch die DE 29 24 592 bekannt, die Stirnflächen des im Mantelrohr angeordenten Wabenkörpers in geschmolzenes Lot einzutauchen.

Aus der DE 43 06 052 A1 ist ein von eine Abgas durchströmbarer Wabenkörper bekannt, der in einem Mantelrohr angeordnet ist. Der Wabenkörper besteht aus einer glatten und einer gewellten Blechlage, die aneinanderliegend spiralförmig aufgerollt sind, so daß zwischen den Blechlagen Strömungskanäle gebildet sind. Die glatte Blechlage liegt dabei außen. Um eine zuverlässige Lötverbindung zu dem Mantelrohr zu ermöglichen, ist die glatte Blechlage an gleichmäßig entlang dem Außenumfang beabstandeten Stellen mit mehreren Öffnungen ausgestattet.

Durch die WO 93/12904 ist ein Verfahren zum Verlöten von Trägerkörpern von Abgaskatalysatoren bekannt. Das Aufbringen eines Lotmaterials auf die Bleche des Wabenkörpers erfolgt dadurch, daß ein Lotpulver in geeigneter Korngröße zunächst in einem flüssigen Gemisch von Bindematerial und Flüssigkeit dispergiert wird und anschließend die Strömungskanäle des Wabenkörpers durchflutet. Nach der Durchflutung wird das überschüssige Gemisch aus den Strömungskanälen entfernt.

Sowohl nach der DE 29 24 592 als auch nach der WO 93/12904 wird durch die verwendeten Verfahren ein Trägerkörper erzielt, bei dem der äußere Bereich des Wabenkörpers mit dem Mantelrohr verlötet ist. Hierdurch entsteht eine starre Verbindung zwischen dem Wabenkörper und dem Mantelrohr.

Aus der WO 94/06594 ist es bereits bekannt, einen Wabenkörper nur in einem axialen Teilbereich mit einem Mantelrohr zu verlöten, indem das Mantelrohr von innen in dem zu verlötenden Teilbereich mit Lotmaterial versehen und anschließend der Wabenkörper in das Mantelrohr geschoben wird.

Aus der WO 93/25339 ist ein weiteres Verfahren zum Beloten eines Wabenkörpers bekannt, bei welchem Lotmaterial von den Stirnseiten her in einen Wabenkörper eingebracht wird.

Die meisten bekannten Belotungsverfahren, insbesondere solche, bei denen von den Stirnseiten her Lot aufgebracht wird, führen dazu, daß die Bleche des Wabenkörpers nicht nur untereinander verlötet werden, sondern daß auch Verbindungen zwischen Wabenkörper und Mantelrohr entstehen. Dies tritt insbesondere bei aus mehreren etwa spiralförmig oder evolventenförmig verlaufenden Blechlagen aufgebauten Wabenkörpern auf, aber auch bei spiralförmig gewickelten Wabenkörpern mit einer gewellten Außenlage. In Verbindung mit solchen Belotungsverfahren ist daher die gezielte Anbindung des Wabenkörpers an das Mantelrohr in nur einem bestimmten axialen Teilbereich nicht problemlos zu verwirklichen. Es entstehen oft zusätzliche Verbindungen zwischen Wabenkörper und Mantelrohr, insbesondere an den Stirnseiten.

Da der Wabenkörper und das Mantelrohr ein unterschiedliches thermisches Dehnverhalten aufweisen, ist eine durchgehende starre Verbindung zwischen dem Wabenkörper und dem Mantelrohr unerwünscht, da durch diese in dem Wabenkörper thermische Spannungen auftreten können welche zu einer Schädigung des Wabenkörpers führen können.

Der Erfindung liegt die Aufgabe zugrunde, die bekannte Vorrichtung zu katalytischen Umsetzen von Abgasen so weiterzubilden, daß eine Verlötung des Wabenkörpers mit dem Mantelrohr in bestimmten axialen Bereichen unabhängig von der Belotungstechnik vermieden wird.

Diese Aufgabe wird erfindungsgemäß durch eine Vorrichtung mit den Merkmalen des Anspruchs 1 gelöst. Vorteilhafte Weiterbildungen sind Gegenstand der Unteransprüche.

Der erfindungsgemäße Wabenkörper, der vorzugsweise für eine Vorrichtung zur katalytischen Umsetzung von Abgasen in einem Abgassystem geeignet ist, zeichnet sich dadurch aus, daß wobei wenigstens ein Blech des Wabenkörpers einen sich von wenigstens einer Stirnseite über einen Teil der axialen Länge des Wabenkörpers erstreckenden und den Wabenkörper zumindest teilweise umgebenden glatten Abschnitt aufweist, zeichnet sich dadurch aus, daß der glatte Abschnitt am Umfang des Wabenkörpers eine äußere Schicht, bildet die an dem Mantelrohr anliegt. Dadurch, daß der glatte Abschnitt an dem Mantelrohr anliegt, kann unabhängig vom Belotungsverfahren kein Lot (oder nur geringe Anteile des Lotes) zwischen den glatten Abschnitt und das Mantelrohr gelangen. Das Aufbringen des Lotes kann wie aus dem Stand der Technik bekannt erfolgen. Die Verbindung des Wabenkörpers mit dem Mantelrohr erfolgt über einen Teil der azialen Länge des Mantelrohrs, wobei der glatte Abschnitt sich in der axialen Richtung des Wabenkörpers nur bis zu dem Verbindungsbereich zwischen dem Wabenkörper und dem Mantelrohr erstreckt.

Hierdurch wird eine thermische Dehnbarkeit in axialer Richtung des Wabenkörpers erzielt, da der Wabenkörper nunmehr mit dem Mantelrohr nur innerhalb eines oder mehrerer Verbindungsbereiche erfolgt. Über den Rest des Wabenkörpers und des Mantelrohrs erfolgt keine unerwünschte Verlötung des Wabenkörpers mit dem Mantelrohr.

Der glatte Abschnitt kann ein Teil eines glatten Bleches sein, welches Bestandteil des Wabenkörpers ist.

Bevorzugt wird eine Ausbildung, bei der wenigstens ein Blech eines Wabenkörpers einen ersten und einen zweiten sich von den Stirnseiten des Wabenkörpers über jeweils einen Teil der axialen Länge des Wabenkörpers höchstens bis zu einem Verbindungsbereich zwischen dem Wabenkörper und dem Mantelrohr erstreckenden und den Wabenkörper umgebenden glatten Abschnitt aufweist. Durch diese Maßnahme kann Lot von einer oder beiden Stirnseiten des Wabenkörpers her aufgebracht werden, ohne daß eine Verbindung der äußeren Schicht des Wabenkörpers mit dem Mantelrohr erfolgt. Ein weiterer Vorteil dieser Ausführungsform liegt darin, daß bei der Herstellung eines solchen Wabenkörpers auch bei einer Belotung nur einer Stirnseite nicht darauf geachtet werden muß, von welcher Stirnseite her es in einen Wabenkörper eingebracht werden muß. Dies vereinfacht die Handhabung und die Herstellung eines solchen Wabenkörpers.

Umfaßt der Wabenkörper einen Stapel wenigstens teilweiser strukturierter Bleche, wobei die Enden des Stapels jeweils gegensinnig um wenigstens zwei Fixpunkte verschlungen sind, so wird vorgeschlagen, zwei Bleche vorzusehen, die wenigstens einen sich von wenigstens einer Stirnseite über einen Teil der axialen Länge des Wabenkörpers erstreckenden und den Wabenkörper umgebenden glatten Abschnitt aufweisen. Die Bleche können jeweils die oberste oder unterste Lage des Stapels bilden. Es ist auch möglich solche Bleche innerhalb des Stapels anzuordnen. Bevorzugt wird eine Ausführungsform, bei der der bzw. die glatten Abschnitte an einem Blech ausgebildet sind, das in der Nähe der Stapelmitte angeordnet ist. Dies hat den Vorteil, daß bei einem S-förmig geschlungenen Wabenkörper mit einem einzigen Blech der gewünschte Erfolg erzielt wird.

Vorzugsweise überlappen sich die glatten Abschnitte in Umfangsrichtung teilweise. Hierdurch wird sichergestellt, daß die durch den glatten Abschnitt gebildete äußere Schicht des Wabenkörpers vollständig ist, so daß ein Lotmittel nicht zwischen den glatten Abschnitt und das Mantelrohr gelangen kann.

Weitere Vorteile und Merkmale der erfindungsgemäßen Vorrichtung werden anhand dreier Ausführungsbeispiele erläutert. In der Zeichnung zeigen:
- Fig. 1: schematisch einen Wabenkörper mit Mantelrohr im Längsschnitt,
- Fig. 2: einen S-förmig verschlungenen Wabenkörper`
- Fig. 3: schematisch den Aufbau eines Wabenkörpers mit langgestrecktem Querschnitt,
- Fig. 4: einen Wabenkörper mit langgestrecktem Querschnitt,
- Fig. 5: vergrößert den Ausschnitt V aus dem Randbereich des Wabenkörpers nach Fig. 3,
- Fig. 6: eine erste Ausführungsform eines glatten Abschnittes und
- Fig. 7: eine zweite Ausführungsform eines glatten Abschnittes.

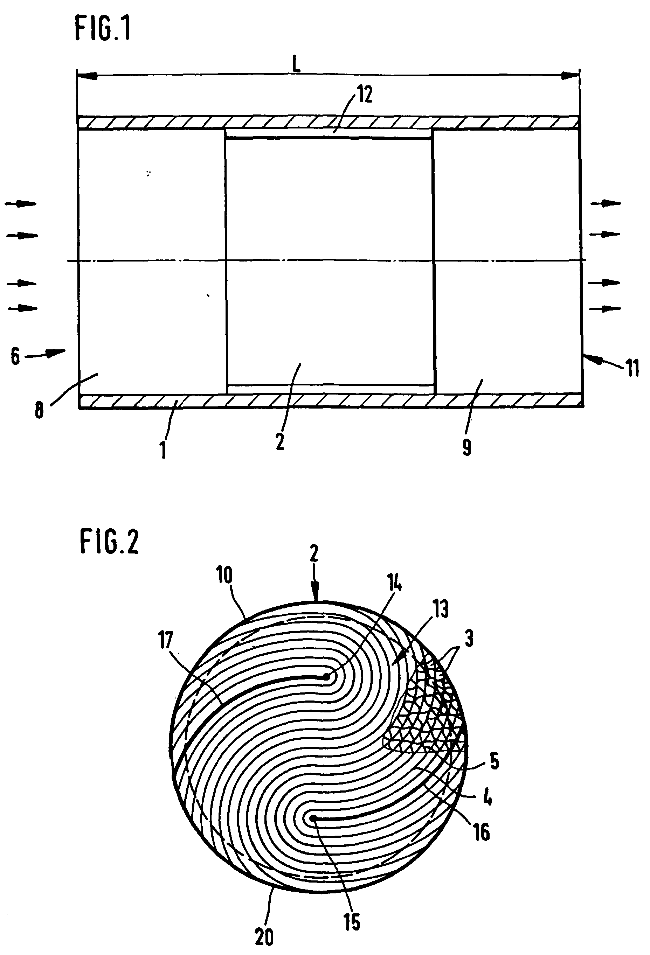

Fig. 1 zeigt schematisch eine Vorrichtung zur katalytischen Umsetzung von Abgasen in einem Abgassystem, insbesondere für ein Abgassystem einer Verbrennungskraftmaschine, vorzugsweise für Otto-Motoren. Die Vorrichtung umfaßt einen in einem Mantelrohr 1 angeordneten von einem Abgas durchströmbaren Wabenkörper 2, dessen Strömungskanäle 3 zwischen aneinander grenzenden Lagen glatter Bleche 4 und strukturierter, vorzugsweise gewellter, Bleche 5 gebildet sind. Der Wabenkörper 2 ist über einen Teil seiner axialen Länge L mit dem Mantelrohr 1 verbunden. In der Fig. 1 ist der Verbindungsbereich zwischen dem Wabenkörper 2 und dem Mantelrohr mit 12 bezeichnet.

Der Wabenkörper 2 weist an einem Blech 5 einen ersten 8 und einen zweiten 9 glatten Abschnitt, die jeweils den Wabenkörper 2 in Umfangsrichtung umgeben. Der erste 8 und der zweite 9 Abschnitt erstrecken sich jeweils von einer Stirnseite 6 bzw. 11 in Längsrichtung des Wabenkörpers. Sie erstrecken sich höchstens bis zu einem Verbindungsbereich 12 zwischen dem Wabenkörper 2 und dem Mantelrohr 1. In der Fig. 2 ist ein zweites Ausführungsbeispiel eines Wabenkörpers dargestellt. Auf die Darstellung des Mantelrohres 1 in den Fig. 2 bis 5 ist der besseren Übersicht wegen verzichtet worden. Der Wabenkörper 2 umfaßt einen Stapel 13 von glatten Blechen 4 und gewellten Blechen 5. Die Enden des Stapels 13 sind jeweils gegensinnig um die Fixpunkte 14, 15 verschlungen. In dem Wabenkörper sind zwei Bleche 16, 17 angeordnet, die jeweils einen glatten Abschnitt 10 bzw. 20 aufweisen. Die glatten Bleche 16, 17 bilden die äußeren Lagen des Stapels 13.

Die glatten Abschnitte 20, 10 erstrecken sich bis zu dem jeweils angrenzenden Abschnitt 10 bzw. 20 des Blechs 16 bzw. 17.

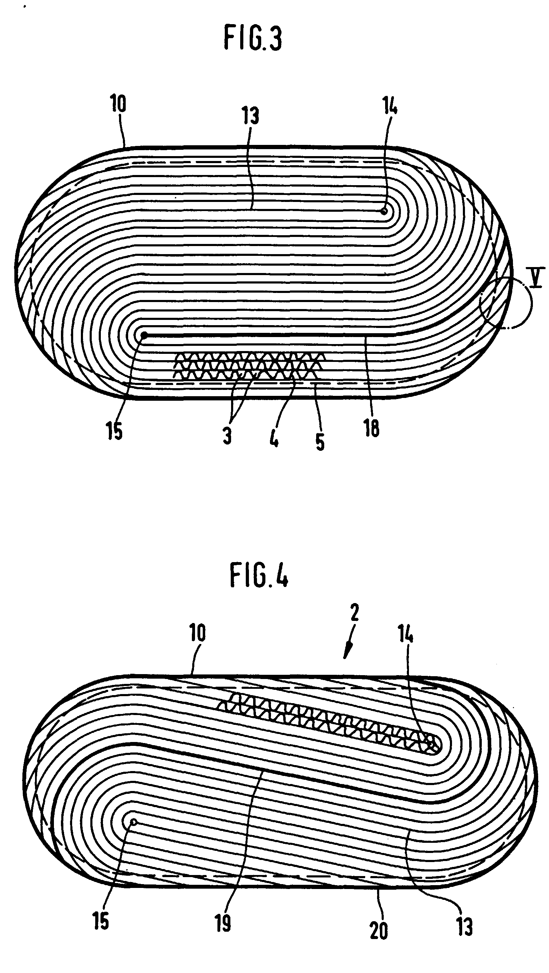

In der Fig. 3 ist ein zweites Ausführungsbeispiel eines Wabenkörpers dargestellt. Auch dieser Wabenkörper umfaßt einen Stapel 13 von Bleche 4, 5 die die Strömungskanäle 3 im Wabenkörper 2 bilden. Der Stapel 13 ist um die Fixpunkte 14, 15 verschlungen. In den Stapel 13 ist ein Blech 18 angeordnet, welches einen Abschnitt 10 aufweist, der so bemessen ist, daß der glatte Abschnitt 10 sich über den gesamten Umfang des Wabenkörpers erstreckt.

In der Fig. 4 ist eine weitere Ausführungsform der Erfindung dargestellt. Etwa mittig innerhalb des Stapels 13 ist ein Blech 19 angeordnet, welches jeweils einen glatten Abschnitt 10, 20 aufweist. Die glatten Abschnitte 10, 20 umgeben über den Umfang hin den Wabenkörper 2 vollständig.

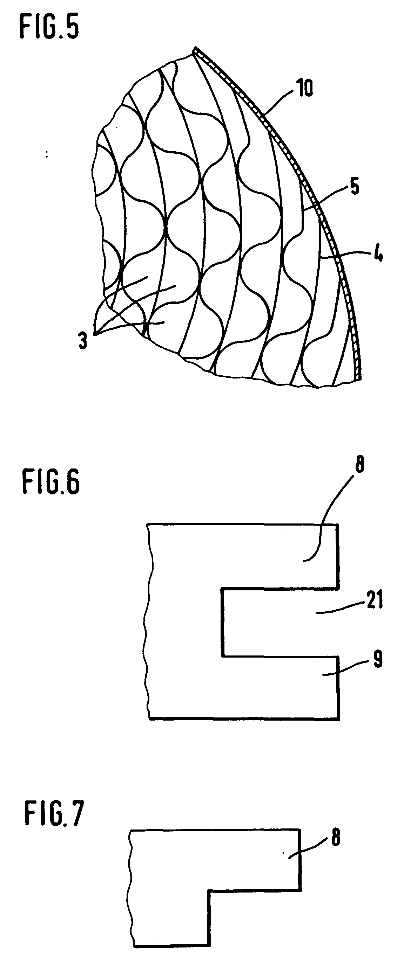

In der Fig. 5 ist vergrößert dargestellt, wie der glatte Abschnitt 10 nach Fig. 3 an den Blechen 4, 5 des Blechstapels 13 anliegt.

In den Fig. 6 und 7 sind an einem Blech 4,5 ausgebildete Abschnitte 8, 9 dargestellt. In der in der Fig. 6 dargestellten Ausführungsform ist zwischen den Abschnitten 8, 9 eine Aussparung 21 ausgebildet, die den Verbindungsbereich 12 des Wabenkörpers 2 mit dem Mantelrohr 1 freigibt. Es können auch weitere glatte Abschnitte vorgesehen sein, die im Abstand zueinander unter Zwischenschaltung von Aussparungen ausgebildet sind. Die Geometrie der glatten Abschnitte kann entsprechend der Gestalt des Verbindungsbereiches augepaßt sein.

### BEZUGSZEICHENLISTE

- 1: Mantelrohr
- 2: Wabenkörper
- 3: Strömungskanal
- 4: glattes Blech
- 5: strukturiertes Blech
- 6: Stirnseite
- 7: Mantel
- 8: Abschnitt
- 9: Abschnitt
- 10: Abschnitt
- 11: Stirnseite
- 12: Verbindungsbereich
- 13: Stapel
- 14: Fixpunkt
- 15: Fixpunkt
- 16: Blech
- 17: Blech
- 18: Blech
- 20: Abschnitt
- 21: Aussparung
- 19: Blech

## Patentansprüche

1. In einem Mantelrohr (1) angeordneter, von einem Abgas durchströmbarer Wabenkörper (2), dessen Strömungskanäle (3) zwischen aneinandergrenzenden Lagen gewickelter oder geschichteter wenigstens teilweise strukturierter Bleche (4, 5) gebildet sind, wobei der Wabenkörper (2) über einen Teil seiner axialen Länge (L) mit dem Mantelrohr (1) verlötet ist und wobei wenigstens eines (16, 17; 18, 19) der Bleche (4, 5) wenigstens einen sich von wenigstens einer Stirnseite (6) über einen Teil der axialen Länge (L) des Wabenkörpers (2) erstreckenden und den Wabenkörper (2) zumindest teilweise umgebenden glatten Abschnitt (8, 9; 10, 20) aufweist, dadurch gekennzeichnet, daß der glatte Abschnitt (8, 9; 10, 20) am Umfang des Wabenkörpers (2) eine diesen umgebende, äußere Schicht bildet, die am Mantelrohr (1) so anliegt, daß die Bleche (4, 5) durch stirnseitige Belotung verbunden werden können ohne daß ein Lotmittel zwischen den glatten Abschnitt (8, 9; 10, 20) und das Mantelrohr (1) gelangen kann.

2. Wabenkörper nach Anspruch 1, dadurch gekennzeichnet, daß wenigstens eines (16, 17; 18, 19) der Bleche (4, 5) einen ersten (8, 10) und einen zweiten (9, 20) sich von den Stirnseiten (6, 11) über jeweils einen Teil der axialen Länge (L) des Wabenkörpers (2) höchstens bis zu einem Verbindungsbereich (12) zwischen dem Wabenkörper (2) und dem Mantelrohr (1) erstreckenden und den Wabenkörper (2) zumindest teilweise umgebenden glatten Abschnitt (8, 9; 10, 20) aufweist.

3. Wabenkörper nach Anspruch 1 oder 2, wobei der Wabenkörper (2) einen Stapel (13) wenigstens teilweise strukturierter Bleche (4, 5) umfaßt, und die Enden des Stapels jeweils gegensinnig um wenigstens zwei Fixpunkte (14, 15) verschlungen sind, dadurch gekennzeichnet, daß der bzw. die glatte(n) Abschnitt(e) (8, 9; 10, 20) an einem (16, 17; 18, 19) der Bleche (4, 5) ausgebildet ist (bzw. sind), das in der Nähe der Stapelmitte angeordnet ist.

4. Wabenkörper nach Anspruch 1, 2 oder 3, dadurch gekennzeichnet, daß der glatte Abschnitt (8, 9; 10, 20) sich in Umfangsrichtung teilweise überlappt.

5. Wabenkörper nach einem der vorherigen Ansprüche, dadurch gekennzeichnet, daß zwei oder mehr glatte Abschnitte (8, 9; 10, 20) den Wabenkörper in Umfangsrichtung zusammen vollständig umschlingen.

## Claims

1. A honeycomb body (2) which is arranged in a tubular casing (1) and through which an exhaust gas can flow, the flow passages (3) thereof being formed between mutually adjoining layers of wound or stacked, at least partially structured metal sheets (4, 5), wherein the honeycomb body (2) is brazed over a part of its axial length (L) to the tubular casing (1) and wherein at least one (16, 17: 18, 19) of the sheets (4, 5) has at least one smooth portion (8, 9; 10, 20) which extends from at least one end (6) over a part of the axial length (L) of the honeycomb body (2) and which at least partially surrounds the honeycomb body (2), characterised in that at the periphery of the honeycomb body (2) the smooth portion (8, 9; 10, 20) forms an outer layer portion which surrounds the honeycomb body and which so bears against the tubular casing (1) that the sheets (4, 5) can be joined by brazing at the end without a brazing agent being capable of passing between the smooth portion (8, 9; 10, 20) and the tubular casing (1).

2. A honeycomb body according to claim 1 characterised in that at least one (16, 17; 18, 19) of the sheets (4, 5) has a first (8, 10) and a second (9, 20) smooth portion (8, 9; 10, 20) which at least partially surround the honeycomb body (2) and extend from the ends (6, 11) over a respective part of the axial length (L) of the honeycomb body (2) at most to a connecting region (12) between the honeycomb body (2) and the tubular casing (1).

3. A honeycomb body according to claim 1 or claim 2 wherein the honeycomb body (2) includes a stack (13) of at least partially structured sheets (4, 5) and the ends of the stack are respectively twisted in opposite directions about at least two fixed points (14, 15), characterised in that the smooth portion or portions (8, 9; 10, 20) is or are provided at one (16, 17; 18, 19) of the sheets (4, 5) which is arranged in the proximity of the middle of the stack.

4. A honeycomb body according to claim 1, claim 2 or claim 3 characterised in that the smooth portion (8, 9; 10, 20) partially overlaps in the peripheral direction.

5. A honeycomb body according to one of the preceding claims characterised in that two or more smooth portions (8, 9; 10, 20) together completely extend around the honeycomb body in the peripheral direction.

## Revendications

1. Corps en nid d'abeilles (2), qui est disposé dans un tube enveloppe (1) et est traversé par des gaz d'échappement et dont les canaux de circulation (3) sont formés entre des couches contiguës de tôle (4,5) enroulées ou disposées suivant des couches et au moins partiellement structurée, et dans lequel le corps en nid d'abeilles (2) est fixé, sur une partie de sa longueur axiale (L), par brasage au tube enveloppe (1), et au moins l'une (16,17;18, 19) des tôles (4,5) possède au moins une partie lisse (8,9; 10,20) qui s'étend à partir d'au moins une face frontale (6) sur une partie de la longueur axiale (L) du corps en nid d'abeilles (2) et entoure au moins en partie le corps en nid d'abeilles (2), caractérisé en ce que la partie lisse (8,9; 18,20) forme, sur le pourtour du corps en nid d'abeilles (2), une couche extérieure entourant ce dernier et qui s'applique sur le tube enveloppe (1) de telle sorte que les tôles (4,5) peuvent être reliées au moyen d'un brasage frontal sans qu'une brasure puisse parvenir entre la partie (8,9;10,20) et le tube enveloppe (1).

2. Corps en nid d'abeilles selon la revendication 1, caractérisé en ce qu'au moins l'une (16,17;18,19) des tôles (4,5) possède une première partie lisse (8,10) et une seconde partie lisse (9,20), qui s'étendent depuis les faces frontales (6,11), respectivement sur une partie de la longueur axiale (L) du corps en nid d'abeilles (2), au maximum jusqu'à une zone de liaison (12) entre le corps en nid d'abeilles (2) et le tube enveloppe (1), et entoure au moins en partie le corps en nid d'abeilles (2).

3. Corps en nid d'abeilles selon la revendication 1 ou 2, dans lequel le corps en nid d'abeilles (2) comprend un empilage (13) de tôles (4,5) au moins partiellement structurées, et les extrémités de l'empilage sont enroulées respectivement en des sens opposés autour de deux points de fixation (14,15), caractérisé en ce que la ou les partie(s) lisse(s) (8,9;10,20) est (sont) formée(s) sur l'une (16,17; 18,19) des tôles (4,5), qui est disposée à proximité du centre de l'empilage.

4. Corps en nid d'abeilles selon la revendication 1, 2 ou 3, caractérisé en ce que la partie lisse (8,9;10, 20) est en chevauchement partiel sur elle-même dans la direction circonférentielle.

5. Corps en nid d'abeilles selon l'une des revendications précédentes, caractérisé en ce que deux ou plusieurs parties lisses (8,9;10,20) entourent complètement le corps en nid d'abeilles dans la direction circonférentielle.
